# EUROPÄISCHE PATENTSCHRIFT

(11) **EP 0 357 908 B1**
(45) Veröffentlichungstag und Bekanntmachung des Hinweises auf die Patenterteilung: **02.03.1994**
(21) Anmeldenummer: 89112652.6
(22) Anmeldetag: 11.07.1989
(51) Int. Cl.: H04N 11/08

(54) **Schaltung zur Vollbildrahmenerkennung von C-, D- und D2-Mac-Paketsignalen**
Circuit for recognizing picture frames of C,D and D2-Mac packet signals
Circuit de reconnaissance de trame d'une image dans des signaux C,D et D2-Mac-paquet

(30) Priorität: 10.08.1988 DE 3827106
(43) Veröffentlichungstag der Anmeldung: 14.03.1990
(73) Patentinhaber: RICHARD HIRSCHMANN GMBH & CO., 73726 Esslingen (DE)
(72) Erfinder: Hilbert, Stephan, D-7305 Altbach (DE)
(74) Vertreter: Stadler, Heinz, Dipl.-Ing.

(56) Entgegenhaltungen:
- EP-A- 8 282 106
- WO-A-84/02242
- US-A- 4 707 730

## Beschreibung

Die Erfindung geht aus von einer Schaltung zur Vollbildrahmenerkennung von C-, D- und D2-Mac-Paketsignalen gemäß dem Oberbegriff des Anspruches 1. Dabei wird der digitale Anteil des Basisband-Signals bei D-Mac-Paketsignalen bereits in binärer Form vom Sender geliefert, bei D2-Mac-Paketsignalen mittels Duobinärdecoder und bei C-Mac-Paketsignalen mittels eines 2-4PSK-Demodulator in binäre Signale umgewandelt. Mit Hilfe dieser vollbildrahmensynchronen Impulse zur Erkennung der Zeile und der zeitlichen Stelle innerhalb der Zeile werden in der Praxis wiederum Impulse für verschiedene Anwendungen abgeleitet, nämlich hauptsächlich Klemmimpulse zur Klemmung von Basisbandsignalen, um damit in Satellitenempfangsanlagen die senderseitig überlagerte Energieverwischungsspannung weitestgehend zu unterdrücken, aber auch zum Beispiel Triggerimpulse für Oszilloskope zur Erzeugung stehender Schirmbilder.

Es ist bereits bekannt, aus dem 64Bit-Rahmensynchronwort des in der Zeile 625 übertragenen digitalen Datenbursts mittels eines Korrelators einen Steuerimpuls abzuleiten, der die Lage der Klemmimpulse innerhalb der Zeilen 1 bis 624 des TV-Vollbildes in die zeitlich richtige Stelle der dort gemäß Spezifikation der European Bordcasting Union "EBU Tech. 3258-E" vorgesehenen Klemmlücken zwischen Datenburst und Chrominanzsignal setzt und den Klemmimpuls in Zeile 625, in der keine Klemmlücke vorgesehen ist, unterdrückt. Diese Art der Vollbildrahmenerkennung ist, insbesondere wegen des erforderlichen teueren 64Bit-Korrelators jedoch äußerst aufwendig.
Es ist weiterhin bekannt, eine Vollbildrahmenerkennung dadurch zu erreichen, daß die Zeilensynchronwörter der Datenbursts in den Zeilen 622, 623 einerseits sowie 624, 625 andererseits, die sonst zeilenweise alternierend nicht invertiert und invertiert übertragen werden, jeweils gleich sind. Hierbei ist zwar im Vergleich zur Erkennung des Rahmensynchronwortes ein geringerer Aufwand beim Korrelator (nur 6 Bit) oder einer entsprechenden Erkennungsschaltung nötig, aber eine bezüglich der Funktionsfähigkeit problematische und zudem aufwendige Taktrückgewinnung aus dem Datenburst erforderlich, weil vor dem Zeilensynchronwort keine Synchronisiersequenz übertragen wird, wie dies vor dem Rahmensynchronwort der Fall ist.

WO-A-8 402 242 zeigt eine Schaltung, die auf ähnliche weise die digitalen Synchronwörter zur Vollbildrahmenerkennung benutzt.

Der Erfindung liegt die Aufgabe zugrunde, eine Schalung zur Vollbildrahmenerkennung gemäß dem Oberbegriff des Anspruches 1 zu schaffen, die problemlos funktioniert und vor allen Dingen kostengünstig aufgebaut ist.

Diese Aufgabe ist erfindungsgemäß durch die kennzeichnenden Merkmale des Patentanspruches 1 gelöst.
Durch die Auswertung des Weiß- und des Schwarz-Referenzsignals in der Referenzzeile 624 sowie der Rahmensynchronisiersequenz anstelle der bekannten Auswertung der Zeilensynchronwörter oder des Rahmensynchronwortes zur Erzeugung der vollbildrahmensynchronen Impulse ist weder ein Korrelator nötig noch eine aufwendige Taktrückgewinnung aus den Datenbursts. Vielmehr kann die erfindungsgemäße Schaltung erheblich einfacher aus preiswerten Standardbausteinen aufgebaut werden, die zum Beispiel einen Klemmverstärker wesentlich verbilligen. Durch die Auswertung nicht nur der Referenzsignale sondern zusätzlich auch der Rahmensynchronisiersequenz ist außerdem die Sicherheit gegen Fehlerkennung des Vollbildrahmens minimiert.

In Anspruch 1 sind legiglich C-, D- und D2-Mac-Paketsignale aufgeführt, weil derzeit nur diese Standards eine Referenzzeile und eine Rahmensynchronisiersequenz in jedem Vollbild aufweisen. Die Anwendung der erfindungsgemäßen Vollbildrahmen-Erkennungsschaltung ist jedoch nicht auf diese Systeme beschränkt, sondern selbstverständlich auch bei - möglicherweise in der Zukunft eingeführten - Standards mit anderen Zeilenzahlen pro Vollbild und abweichenden Datencodierungen möglich, sofern diese ähnliche Referenzzeilen und eine Rahmensynchronisiersequenz aufweisen, wie dies bei den genannten Mac-Paketsignalen der Fall ist.

In den Unteransprüchen sind vorteilhafte Ausführungen und Ergänzungen der im Hauptanspruch angegebenen Schaltung beschrieben.
Der Schaltungsaufbau gemäß Anspruch 2 stellt eine einfache und zweckmäßige Realisierung der Referenzzeilen-Erkennungsschaltung dar, wobei die vollständige Zeile 624 geprüft wird und damit eine sichere Erkennung auch dann gewährleistet ist, wenn in anderen Zeilen teilweise gleiche Signale übertragen werden.

Durch die Ausblendung des Bildinhaltes in den Zeilen 1 bis 623 aller auf das erste Vollbild folgenden Vollbilder (Anspruch 3) ist auf ebenso einfache und kostengünstige wie funktionssichere Weise erreicht, daß - was praktisch nie völlig auszuschließen ist - in den Zeilen 1 bis 623 übertragene Signale, die den Referenzsignalen und der Rahmensynchronisiersequenz entsprechen, zu keiner Fehlerkennung des Vollbildrahmens führen können.
Ein gemäß Anspruch 4 in die Rahmensynchronisiersequenz-Erkennungsschaltung eingefügtes Monoflop bewirkt in vorteilhafter Weise, daß die Betriebssicherheit noch weiter erhöht ist, weil der Ausgang dieses Monoflops nur auf High bleibt, so lange an seinem Setz-Eingang eine 01- bzw. 10-Bit-Folge entsprechend der Rahmensynchronisiersequenz anliegt und bei jedem anderen Bitmuster der Zähler zurückgesetzt wird. Die Wahrscheinlichkeit für eine Fehlerkennung dieser Rahmensynchronisiersequenz ist daher äußerst gering.

In den Figuren ist die erfindungsgemäße Schaltung der Vollbildrahmenerkennung noch beispielsweise näher erläutert. Dabei zeigen:
- Figur 1 ein Blockschaltbild des Prinzipaufbaus einer Synchronisationsschaltung für C-, D- und D2-Mac-Paketsignale zur Erzeugung zeilensynchroner Klemmimpulse,
- Figur 2 ein Blockschaltbild eines Ausführungsbeispiels der erfindungsgemäßen Vollbildrahmen-Erkennungsschaltung für D2-Mac-Paketsignale und
- Figur 3 die Signalbilder der in den für die Schaltungsfunktion bedeutsamen Bereichen der Zeilen 624 und 625 an verschiedenen Punkten der Schaltung gemäß Figur 2, wobei die jeweiligen Signalziffern in beiden Figuren aufgeführt sind.

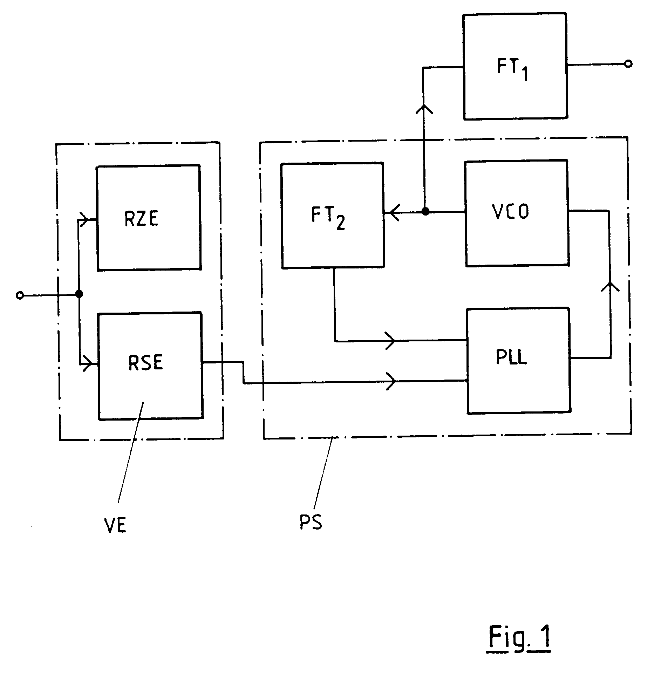

Die Synchronisationsschaltung gemäß Figur 1 besteht aus einer Vollbildrahmen-Erkennungsschaltung VE, einer Phasenregelschleife PS sowie einem dieser nachgeschalteten Frequenzteiler FT1.
Zur eindeutigen Erkennung des Vollbildrahmens besteht die Vollbildrahmen-Erkennungsschaltung VE aus einer Referenzzeilen-Erkennungsschaltung RZE sowie einer Rahmensynchronisiersequenz-Erkennungsschaltung RSE. In der Referenzzeilen-Erkennungsschaltung RZE werden das Weiß- und das Schwarz-Referenzsignal detektiert und zur Steuerung von Freigabesignalen für Zähler und Monoflops ausgewertet. Ergibt sich eine bestimmte Kombination der Zählerzustände, so gilt die Referenzzeile (Zeile 624) als erkannt. Sobald ein Zählerzustand zum jeweils richtigen Zeitpunkt nicht dem Sollwert entspricht, beginnt die Detektion von neuem.
Weil die Erkennung der Referenzzeile keine eindeutige Bestimmung des Vollbildrahmens ermöglicht, wird zusätzlich die Rahmensynchronisiersequenz, auch als "clock run in" bezeichnet, ausgewertet. Wenn die Referenzzeile erkannt ist, wird ein Zeitfenster an die Stelle des Signals gesetzt, an der der "clock run in" erwartet wird. Dieser wird in dem Zeitfenster als Takt für einen Zähler benutzt. Gezählt werden nur die Takte der 01- bzw. 10-Folge. Sofern diese durch ein anderes Bit-Muster unterbrochen ist, wird der Zähler zurückgesetzt und es beginnt von neuem die Referenzzeilenerkennung.
Wenn die Referenzzeile und zusätzlich der "clock run in" erkannt sind, dann ist der Vollbildrahmen ebenfalls eindeutig erkannt. Nach dem ersten Erkennen des Vollbildrahmens wird der Bildinhalt bis zur nächsten Referenzzeile ausgeblendet. Mit den von der Vollbildrahmen-Erkennungsschaltung VE gelieferten vollbildrahmensynchronen Impulsen wird in der Phasenregelschleife PS ein VCO mit Hilfe einer PLL und eines Frequenzteilers FT2 phasenstarr verkoppelt. Der Phasenvergleich findet bei der Vollbildfrequenz (25 Hz) statt. Von dem synchronisierten VCO werden durch Teilung in dem nachgeschalteten Frequenzteiler FT1 zeilenfrequente Impulse, zum Beispiel Klemmimpulse für Klemmverstärker oder Triggerimpulse für Oszilloskope erzeugt.

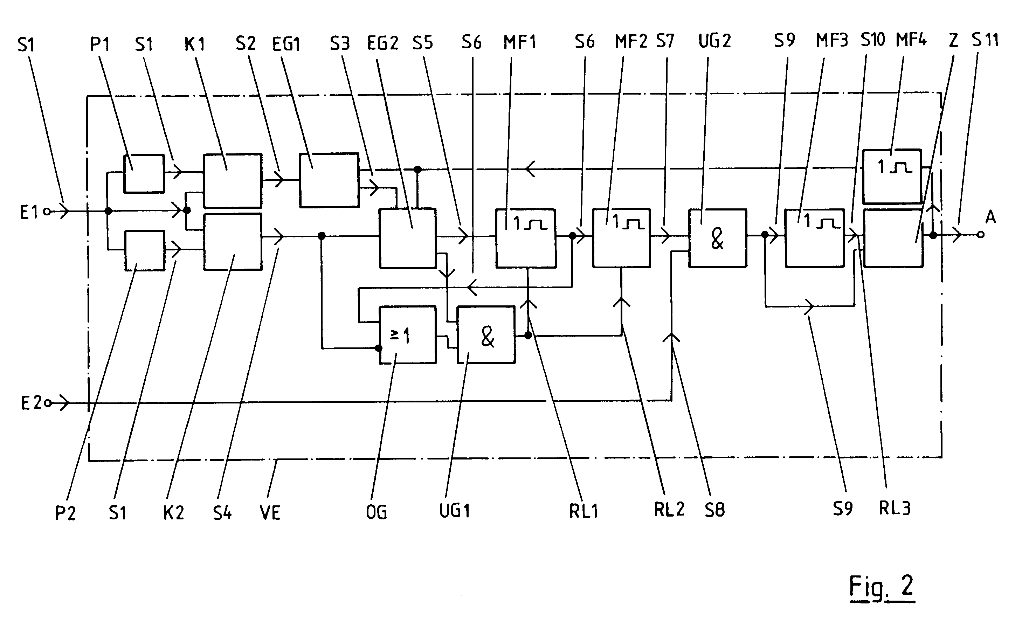

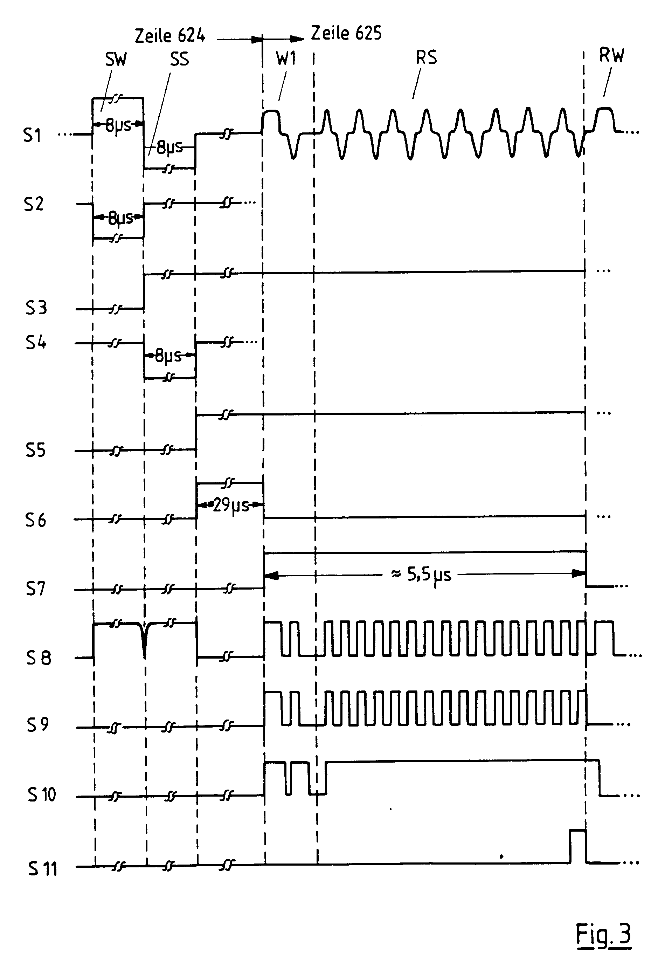

Im folgenden ist nun der erfindungsrelevante Teil einer derartigen Synchronisationsschaltung, nämlich die in Figur 2 dargestellte Vollbildrahmen-Erkennungsschaltung VE näher beschrieben.
Das an einem ersten Eingang E1 anliegende Signal S1, welches den hier interessierenden Teil der Zeilen 624 und 625 des Basisbandsignals zeigt, läuft zum einen über einen ersten Spannungskomparator K1, dessen Schwelle mittels eines Potentiometers P1 so eingestellt ist, daß das Weiß-Referenzsignal SW in Zeile 624 (Dauer 8 µs) einen negativen Impuls gleicher Dauer in seinem Ausgangssignal (Signal S2) erzeugt, und zum anderen über einen zweiten Spannungskomparator K2, dessen Schwelle mittels eines Potentiometers P2 so eingestellt ist, daß er während des Schwarz- Referenzsignals SS (Dauer 8 µs) einen gleich langen negativen Impuls liefert (Signal S4). Die Signale S2 und S4 werden jeweils einem einen Zähler (nicht dargestellt) und ein Flipflop (nicht dargestellt) enthaltenden ersten bzw. zweiten Erkennungsglied EG1 bzw. EG2 zugeführt. Der dem ersten Erkennungsglied EG1 zugeführte negative Impuls, bei dem in Fig. 3 das Zeilensynchronwort W1, die Rahmensynchronisiersequenz RS und die ersten drei Bit des 64 Bit-Rahmensynchronwortes RW für ein Vollbild dargestellt sind, dient dort als Freigabesignal für den Zähler (Zeitmessung), der seine Zähltakte von einem nicht darge stellten externen Taktgeber erhält (Taktfrequenz 1,262625 MHz).

Während der Dauer (8 µsec.) des Negativimpulses zählt der Zähler auf einen dieser Impulsdauer sowie der Taktfrequenz entsprechenden Wert, der im vorliegenden Fall rechnerisch etwa 10 wäre, aus Gründen der Betriebssicherheit jedoch auf 8 festgelegt ist. Hat der Zähler des ersten Erkennungsgliedes EG1 bis 8 gezählt, so gibt er einen Setzimpuls an dessen Flipflop ab, wodurch die Erkennung des Schwarz-Referenzsignals SS im zweiten Erkennungsglied EG2 freigegeben wird (Signal S3).
Bei gesetztem Flipflop des ersten Erkennungsgliedes EG1 zählt der Zähler des zweiten Erkennungsgliedes EG2 während des Schwarz-Referenzsignals SS ebenfalls auf 8. Ist dieser Zählwert erreicht, so wird das Flipflop des zweiten Erkennungsgliedes EG2 gesetzt, wodurch zur Freigabe der Erkennung der Rahmensynchronisiersequenz RS ein Signal S5 vom zweiten Erkennungsglied EG2 abgegeben wird.
Damit ist an sich die Referenzzeile deutlich erkannt. Zur Vergrößerung der Sicherheit gegen Fehlerkennung ist jedoch zusätzlich dem zweiten Erkennungsglied EG2 ein erstes Monoflop MF1 nachgeschaltet, das grundsätzlich auch ein Zähler sein könnte, und ein Oder-Glied OG sowie ein erstes Und-Glied UG1 vorgesehen, wobei der Ausgang des Monoflops MF1 mit dem einen Eingang des Oder-Glieds OG und dessen anderer, invertierender Eingang mit dem Ausgang des zweiten Spannungskomparators K2 verbunden ist und der Ausgang des Oder-Glieds OG mit dem Flipflop des zweiten Erkennungsgliedes EG2 über das erste Und-Glied UG1 verknüpft sind, welches bei vorhandenem Ausgangssignal das erste Monoflop MF1 über eine Resetleitung RL1 zurücksetzt. Das erste Monoflop MF1 weist eine Zeitkonstante von 29 µs auf und bleibt damit, sofern es durch das Signal S5 gestartet wird, bis zum Ende der Zeile 624 gesetzt, wobei es ein Signal S6 abgibt.
Detektiert nun der zweite Spannungskomparator K2 während der 29 µs ein Signal mit einer Amplitude, welche größer oder gleich der Datenburst-Spitzenamplitude ist, so wird das erste Monoflop MF1 zurückgesetzt und die Referenzzeilenerkennung erneut gestartet. Außerdem erfolgt die Referenzzeilenerkennung auch dann von vorne, wenn ein Schwarzwert mit ≦ 12 µs am zweiten Spannungskomparator K2 anliegt.
Mit der abfallenden Flanke des ersten Monoflops MF1 wird ein zweites Monoflop MF2, anstatt dessen ebenfalls ein Zähler vorgesehen sein könnte, mit einer Zeitkonstanten von ca. 5,5 µs gesetzt (Signal S7). Diese Zeitspanne dient als Zeitfenster zur Freigabe für die Auszählung der Takte der Rahmensynchronisiersequenz RS.

Wird aus den zuvor genannten Gründen das erste Monoflop MF1 zur Vermeidung einer Fehlerkennung zurückgesetzt, so wird zugleich das zweite Monoflop MF2 über die Resetleitung RL2 zurückgesetzt um ein falschen Setzen des zweiten Monoflops MF2 durch die abfallende Flanke des Ausgangssignals des ersten Monoflops MF1 zu verhindern.

Mit diesen Maßnahmen wird verhindert, daß bei einem dem Weiß-/Schwarz-Referenzsignal SW,SS ähnlichen Bildinhalt zu einem beliebigen Zeitpunkt während der Chrominanz- bzw. Luminanzübertragung in einer beliebigen Zeile das Zeitfenster für die erwartete Rahmensynchronisiersequenz RS an eine falsche Stelle des Basisbandsignals gesetzt wird. Fehlerkennungen zum Beispiel durch 5 MHz-Frequenzpakete werden damit sicher vermieden.

Vor einem zweiten Eingang E2 der Vollbildrahmen-Erkennungsschaltung VE wird mittels eines Duobinärdecoders das ternäre Datensignal in Zeile 625 in ein binäres Signal umgesetzt. Aus der Rahmensynchronisiersequenz RS wird somit eine 32-Bit-01- bzw. 10-Folge. Dieses decodierte Datensignal S8 wird mit dem Ausgangssignal S7 des zweiten Monoflops MF2 über ein zweites Und-Glied UG2 verknüpft und bei Freigabe durch das Signal S7 (5,5 µs-Fenster) einerseits einem Zähler Z für den "clock run in" und zum anderen einem positivflankengetriggerten nachtriggerbaren dritten Monoflop MF3 mit einer Zeitkonstante von 250 ns zugeführt (Signal S9). Die Rahmensynchronisiersequenz der Signale S8 und S9 weist durch die Duobinärdecodierung die doppelte Taktfrequenz der Rahmensynchronisiersequenz RS des Signals S1 auf, nämlich 10,125 MHz. Die Bit-Dauer beträgt damit 98,76 ns. Die positiven Flanken der Rahmensynchronisiersequenz des Signales S9 liegen daher um 2 x 98,76 = 197,52 ns auseinander. Aus Betriebssicherheitsgründen ist jedoch das Zeitfenster des dritten Monoflops MF3 auf 250 ns, entsprechend etwa 2,5 Bit, festgelegt worden.
Der Ausgang des dritten Monoflops MF3 bleibt auf "High", solange an seinem Setzeingang eine 01- bzw. 10-Folge anliegt. Bei jedem anderen Bit-Muster entsteht ein Rücksetzimpuls (Signal 10) auf der Resetleitung RL3 für den nachfolgenden Zähler Z. Zu Beginn des Zählvorgangs der Rahmensynchronisiersequenz-Impuls wird der Zähler Z durch das Zeilensynchronwort W1 oder W2 (keine 01- bzw. 10-Folge) zurückgesetzt.
Zählt der Zähler Z auf 15 (binär 1111 entspricht 32 Bit 01- bzw. 10-Folge), so wird am Ausgang A ein zum Vollbildrahmen synchroner Impuls (Signal S11) abgegeben, aus dem dann, wie zu Figur 1 bereits beschrieben, zum Beispiel zeilensynchrone Klemmimpulse für einen Klemmverstärker erzeugt werden.

Mit dem vollbildrahmensynchronen Impuls wird zugleich ein viertes Monoflop MF4 mit einer Zeitkonstanten von 39,87 ns gesetzt, welches die Erkennungsglieder EG1 und EG2 während der Zeilen 1 bis 623 sperrt, d.h. den Bildinhalt dieser Zeilen ausblendet. Dadurch wird auf einfache Weise eine falsche Vollbildrahmenerkennung während der Zeilen 1 bis 623 durch der Referenzzeile 624 sowie der Rahmensynchronisiersequenz in Zeile 625 entsprechende Signale vermieden.

Die beschriebene Vollbildrahmen-Erkennungsschaltung VE zeichnet sich nicht nur durch eine hohe Sicherheit gegen Fehlerkennungen aus, sondern vor allem auch durch geringe Herstellkosten, weil dafür ausschließlich preisgünstige Standardbausteine mit einem Wert von weniger als 1 DM verwendbar sind, während vergleichsweise ein 64-Bit-Korrelator derzeit ca. 200 DM kostet.

## Patentansprüche

1. Schaltung zur Vollbildrahmenerkennung von C-, D- und D2-MAC-Paketsignalen, insbesondere für Klemmverstärker mit getasteter Klemmung, zur Erzeugung von vollbildrahmensynchronen Impulsen, wobei der digitale Anteil des Basisbandsignales in binärer Form (RTZ-Signal) verwertet wird,
**dadurch gekennzeichnet**, daß das Basisbandsignal zum einem einer Referenzzeilen-Erkennungsschaltung (RZE) zur Erkennung des in der Referenzzeile (Zeile 624) enthaltenen Weiß- und Schwarz-Referenzsignals zugeführt ist, die bei erkannter Referenzzeile ein Freigabesignal (S7) abgibt, und zum anderen direkt einer Schaltung (RSE) zur Erkennung der in Zeile 625 übertragenen Rahmensynchronisiersequenz zugeführt ist, in der es mit den Freigabesignal durch ein Und-Glied (UG2) verknüpft ist, dessen Ausgang mit dem Eingang eines Zählers (Z) verbunden ist, der an seinem Ausgang (A) vollbildrahmensynchrone Impulse liefert.

2. Schaltung nach Anspruch 1, **dadurch gekennzeichnet**, daß die Referenzzeilen-Erkennungsschaltung (RZE) folgende Schaltungsteile aufweist:
- je einen Spannungskomparator (K1, K2) für das Weiß- (SW) und das Schwarz-Referenzsignal (SS);
- ein erstes Erkennungsglied (EG1), das einen vom ersten Spannungskomparator (K1) für das Weiß-Referenzsignal (SW) angesteuerten Zähler mit Flipflop enthält;
- ein zweites Erkennungsglied (EG2), das einen vom zweiten Spannungskomparator (K2) für das Schwarz-Referenzsignal (SS) und dem ersten Erkennungsglied (EG1) angesteuerten Zähler mit Flipflop enthält, wobei die beiden Zähler der Erkennungsglieder (EG1, EG2) den gleichen Zähltakt erhalten ;
- ein den zweiten Erkennungsglied (EG2) nachgeschaltetes erstes Monoflop (MF1) mit einer Zeitkonstanten von etwa 29 µs;
- ein Oder-Glied (OG), dessen einer Eingang mit dem Ausgang des ersten Monoflops (MF1) und dessen anderer, invertierender Eingang mit dem Ausgang des zweiten Spannungskomparators (K2) für das Schwarz-Referenzsignal (SS) verbunden ist; sowie
- ein zweites Und-Glied (UG2), dessen einer Eingang mit den Ausgang des Oder-Gliedes (OG) und dessen anderer Eingang mit dem Flipflop des zweiten Erkennungsgliedes (EG2) verbunden ist, wobei ein Ausgangsimpuls des zweiten Und-Gliedes (UG2) das erste Monoflop (MF1) zurücksetzt.

3. Schaltung nach Anspruch 2, dadurch gekennzeichnet, daß nach Durchlauf des ersten Vollbildes in den folgenden Vollbildern den Zählern der Erkennungsglieder (EG1, EG2) lediglich der Bildinhalt der Zeilen 624 und 625 zugeführt wird.

4. Schaltung nach einem der Ansprüche 2 oder 3, dadurch gekennzeichnet, daß der Ausgang des ersten Und-Gliedes (UG1) zusätzlich mit einem nachtriggerbaren, positivflankengetriggerten dritten Monoflop (MF3) verbunden ist, das dem Zähler (Z) einen Rücksetzimpuls zuführt, wenn der digitale Anteil des Ausgangssignals des ersten Und-Gliedes (UG1) nicht das Soll-Bitmuster der Rahmensynchronisiersequenz aufweist.

## Claims

1. Circuit for recognizing picture frames of C, D and D2-Mac packet signals, in particular for clip terminal amplifiers with locked clips, for the generation of fully picture frame synchronized pulses, the digital portion of the base band signal being processed in binary form (RTZ signal),
in such a way characterized, that the base band signal, on the one hand, is fed into a reference line recognition circuit (RZE) that serves to recognize the white and black reference signals that are contained in the reference line (line 624) which after it has recognized the reference line emits a validation signal (S7), and, on the other hand, is directly fed into a circuit (RSE) that recognizes the picture frame synchronization sequence that is transmitted in line 625 where it is related to the validation signal by way of an AND element (UG2), the output of which is connected to the input of a counter (Z) that at its own output (A) delivers picture frame synchronized pulses.

2. Circuit according to claim 1, in such a way characterized, that the reference line recognition circuit (RZE) possesses the following circuit elements:
- two voltage comparators (K1, K2), one each for the white (SW) and black (SS) reference signals;
- a first recognition element (EG1) containing a counter with flip-flop that is controlled by the first voltage comparator (K1) for the white reference signal (SW);
- a second recognition element (EG2) containing a counter with flip-flop that is controlled by the second voltage comparator (K2) for the black reference signal (SS) and the first recognition element (EG1), the two counters (EG1, EG2) receiving the same count pulses;
- a first mono-flop (MF1) with a time constant of approximately 29 µs, being connected after the second recognition element (EG2);
- an OR element (OG) whose one input is connected to the output of the first mono-flop (MF1) and whose other inverting input is connected to the output of the second voltage comparator (K2) for the black reference signal (SS); and
- a second AND element (UG2) whose one input is connected to the output of the OR element (OG) and whose other input is connected to the flip-flop of the second recognition element (EG2), wherewith one output pulse of the second AND element (UG2) will reset the first mono-flop (MF1).

3. Circuit according to claim 2, in such a way characterized, that after passing of the first picture frame, for the following picture frames the counters of the recognition elements (EG1, EG2) only receive the picture contents of lines 624 and 625.

4. Circuit according to one of the claims 2 or 3, in such a way characterized, that the output of the first AND element (UG1) has an additional connection to a third, subsequently triggerable, positively ramp triggered mono-flop (MF3) that transmits a reset pulse to the counter (Z) whenever the digital portion of the output signal of the first AND element (UG1) does not correspond to the predefined bit pattern of the picture frame synchronization sequence.

## Revendications

1. Circuit de reconnaissance de trame d'une image dans des signaux C-, D- et D2-Mac-paquet, en particulier pour amplificateurs de jonction avec blocage à touches, pour production d'impulsions synchronisées avec la trame d'image, la partie digitale du signal de la bande de base étant traitée en mode binaire (signal RTZ);
caractérisé par le fait que le signal de la bande de base est transmis d'une part à un circuit de reconnaissance de la ligne de référence (RZE) servant à déterminer le signal de référence noir et blanc contenu dans la ligne de référence (ligne 624), circuit qui, après avoir reconnu la ligne de référence, émet un signal de validation (S7), et d'autre part, ce signal est transmis directement à un circuit (RSE) qui reconnait la séquence de synchronisation de la trame transmise dans la ligne 625, dans lequel le signal est lié au signal de validation par un élément "Et" (UG2), dont une sortie est reliée à l'entrée d'un totalisateur (Z) qui livre à sa propre sortie (A) des impulsions synchrones à la trame d'image.

2. Circuit répondant à l'exigence 1, caractérisé par le fait que le circuit de reconnaissance de la ligne de référence (RZE) comporte les pièces de circuit suivantes:
- deux comparateurs de tension (K1, K2) pour les signaux de référence noir (SS) et blanc (SW);
- un premier élément de reconnaissance (EG1) comprenant un totalisateur avec basculeur bistable commandé par le premier comparateur de tension (K1) pour le signal de référence blanc (SW);
- un deuxième élément de reconnaissance (EG2) comprenant un totalisateur avec basculeur bistable commandé par le deuxième comparateur de tension (K2) pour le signal de référence noir (SS) et par le premier élément de reconnaissance (EG1), les deux totalisateurs des éléments de reconnaissance (EG1, EG2) étant programmés à la même cadence de totalisation.
- un premier basculeur monostable (MF1) avec une constante de temps de 29 µs environ, branché en aval du deuxième élément de reconnaissance (EG2);
- un élément "OU" (OG) dont une entrée est reliée à la sortie du premier basculeur monostable (MF1) et l'autre entrée, inverseuse celle-là, à la sortie du deuxième comparateur de tension (K2) pour le signal de référence noir (SS), ainsi que
- un deuxième élément "ET" (UG2), dont une entrée est reliée à la sortie de l'élément "OU" (OG) et l'autre au basculeur bistable du deuxième élément de reconnaissance (EG2), une impulsion de sortie du deuxième élément "ET" (UG2) remettant à zéro le premier basculeur monostable (MF1).

3. Circuit répondant à l'exigence 2, caractérisé par le fait qu'après le passage de la première trame, seul le contenu en image des lignes 624 et 625 des trames suivantes est transmis aux totalisateurs des éléments de reconnaissance (EG1, EG2).

4. Circuit répondant à l'une des exigences 2 ou 3, caractérisé par le fait que la sortie du premier élément "ET" (UG1) est additionnellement reliée à un troisième basculeur monostable (MF3) à déclenchement par flanc pouvant être activé ultérieurement, qui transmet au totalisateur (Z) une impulsion de remise à zéro lorsque la partie digitale du signal de sortie en provenance du premier élément "ET" (UG1) ne correspond pas à la structure binaire de consigne de la séquence de synchronisation de la trame.
